# DEMANDE DE BREVET EUROPEEN

(11) **EP 2 579 008 A1**
(43) Date de publication de la demande: **10.04.2013**
(21) Numéro de dépôt: 11306290.5
(22) Date de dépôt: 06.10.2011
(51) Int. Cl.: G01F 15/14

(54) **Compteur de fluide, en particulier d'eau**

(71) Demandeur: Itron France, 92130 Issy-Les-Moulineaux (FR)
(72) Inventeur: Renoud, Anthony, 01290 Saint André D'Huiriat (FR); Schwenter, Sébastien, 69460 Odenas (FR)
(74) Mandataire: Howson, Richard G.B.

(57) **Abrégé**

L'invention concerne un compteur de fluide, en particulier d'eau, comportant un totalisateur (2) présentant une carte électronique (2C) supérieure comportant un écran de comptage (2D), ce totalisateur (2) étant recouvert d'un couvercle (3) comportant une fenêtre (3A) de visualisation dudit écran (2D) et ce couvercle (3) étant lui-même recouvert d'une coiffe (4) présentant une fenêtre externe (4'A) de visualisation dudit écran, un couvre-écran (5) étant monté sur ladite coiffe (4) pour recouvrir et protéger ledit écran (2D) et ladite fenêtre externe (4'A).

Selon l'invention, ledit couvre-écran (5) est pourvu d'au moins un axe de pivotement (5A, 5B) disposé sur un palier (4A, 4B) porté par ladite coiffe (4) et en ce que ladite coiffe (4) est pourvue d'au moins un orifice (4D, 4E) de passage d'un élément de verrouillage (3B, 3C) dudit axe sur ledit palier, cet élément de verrouillage étant porté par ledit couvercle (3).

## Description

L'invention concerne un compteur de fluide, en particulier d'eau.

Classiquement, un compteur de fluide, en particulier d'eau, comporte une bâche pourvue d'une conduite d'arrivée et d'une conduite de sortie de l'eau et contenant une chambre de mesure, qui peut être à turbine, à piston oscillant ou statique, par exemple à ultrasons. Sur cette bâche est monté et connecté un totalisateur permettant de déterminer le débit ou le volume d'eau traversant la bâche. Ce totalisateur comporte divers éléments électriques, mécaniques et électroniques et est contenu dans un couvercle, en général en matière plastique, qui assure son maintien et qui comporte une fenêtre de visualisation d'un écran de comptage, en général à cristaux liquides.

Ce couvercle est lui-même recouvert d'une coiffe qui porte des marquages spécifiques au compteur, assure une fonction anti-fraude et présente une fenêtre externe de visualisation de l'écran.

Un couvre-écran peut être monté sur la coiffe pour recouvrir et protéger cet écran des rayons ultra-violets et empêcher l'introduction d'éléments extérieurs, tels que de la boue ou des poussières, par la fenêtre externe.

L'invention concerne cet agencement de couvre-écran.

Ce couvre-écran constitué d'un cache pivotant peut être simplement clipsé sur la coiffe, par montage d'un axe porté par le couvre-écran sur des éléments de clipsage formant charnière et, dans ce cas, il est démontable, s'il est souhaité un compteur non pourvu d'un tel couvre-écran.

Cependant, dans ce cas, le couvre-écran peut également être facilement démonté ou même non-monté à la fabrication, par inadvertance, alors qu'il est indispensable que l'écran et surtout sa fenêtre externe soient protégés, dans des conditions particulièrement difficiles d'environnement, par exemple quant aux poussières.

L'invention résout ce problème en proposant un agencement de couvre-écran qui soit indémontable tout en étant de montage particulièrement simple au moment de la fabrication du compteur. En effet, ce montage peut être effectué complètement manuellement.

Pour ce faire, l'invention propose un compteur de fluide, en particulier d'eau, comportant un totalisateur présentant une carte électronique supérieure comportant un écran de comptage, ce totalisateur étant recouvert d'un couvercle comportant une fenêtre de visualisation dudit écran et ce couvercle étant lui-même recouvert d'une coiffe présentant une fenêtre externe de visualisation dudit écran, un couvre-écran étant monté sur ladite coiffe pour recouvrir et protéger ledit écran et ladite fenêtre externe, compteur caractérisé en ce que ledit couvre-écran est pourvu d'au moins un axe de pivotement disposé sur un palier porté par ladite coiffe et en ce que ladite coiffe est pourvue d'au moins un orifice de passage d'un élément de verrouillage dudit axe sur ledit palier, cet élément de verrouillage étant porté par ledit couvercle.

Selon un mode de réalisation préféré, ledit palier est constitué d'un logement de section en L inversé.

Dans ca cas, avantageusement, l'élément de verrouillage est constitué d'un logement complémentaire de section en L, ledit orifice étant adjacent audit palier.

Ledit couvre-écran peut être pourvu de deux dits axes de pivotement disposés sur deux dits paliers et ladite coiffe peut être pourvue de deux dits orifices de passage de deux dits élément de verrouillage.

Ledit couvre-écran peut être pourvu d'un ressort de rappel en position fermée.

L'invention est décrite ci-après plus en détail à l'aide de figures ne représentant qu'un mode de réalisation préféré de l'invention.
La figure 1 est une vue en perspective éclatée d'un compteur conforme à l'invention.
La figure 2 est une vue partielle en perspective éclatée d'un compteur conforme à l'invention.
La figure 3 est une vue partielle en coupe d'un compteur conforme à l'invention.
La figure 4 est une autre vue partielle en coupe d'un compteur conforme à l'invention.
La figure 5 est une vue en perspective d'un compteur conforme à l'invention, avec son couvre-écran fermé.
La figure 6 est une vue en perspective d'un compteur conforme à l'invention, avec son couvre-écran ouvert.

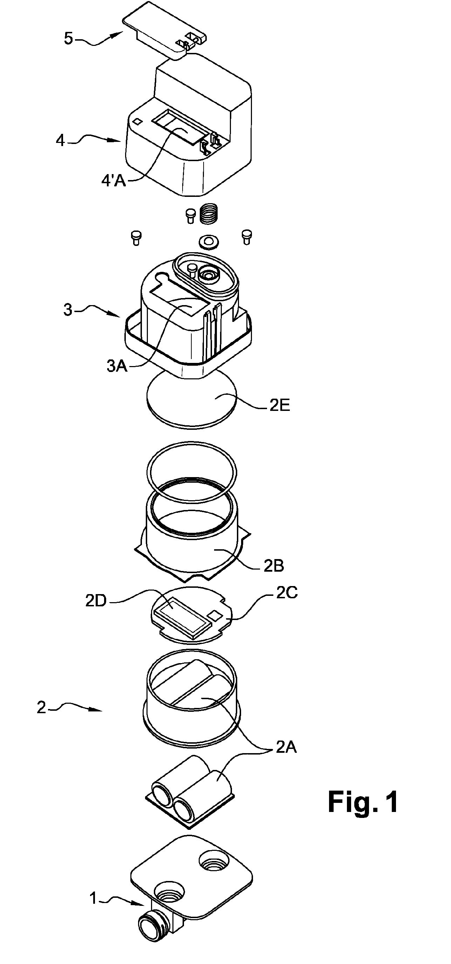

Comme représenté sur la figure 1, un compteur de fluide, en particulier d'eau, comporte une bâche 1 pourvue d'une conduite d'arrivée et d'une conduite de sortie de l'eau et contenant une chambre de mesure, qui peut être à turbine, à piston oscillant ou statique, par exemple à ultrasons. Sur cette bâche 1 est monté et connecté un totalisateur 2 permettant de déterminer le débit ou le volume d'eau traversant la bâche. Ce totalisateur 2 comporte divers éléments électriques, mécaniques et électroniques 2A et est contenu dans un carter 2B, par exemple métallique, et comporte une carte électronique supérieure 2C comportant un écran de comptage 2D et recouverte d'une plaque transparente 2E, en matière plastique ou en verre.

Ce totalisateur 2 est recouvert d'un couvercle 3, en général en matière plastique, qui assure son maintien et qui comporte une fenêtre 3A de visualisation de l'écran 2D.

Ce couvercle 3 est enfin lui-même recouvert d'une coiffe 4 qui porte des marquages spécifiques au compteur, assure une fonction anti-fraude et présente également une fenêtre, externe, 4'A de visualisation de l'écran 2D. Elle peut contenir comme représenté sur la figure 1 une antenne de télérelevé.

Un couvre-écran 5 est monté sur la coiffe 4 pour recouvrir et protéger cet écran des rayons ultra-violets et protéger cette fenêtre externe 4'A, afin d'empêcher l'introduction d'éléments extérieurs tels que de la boue ou des poussières.

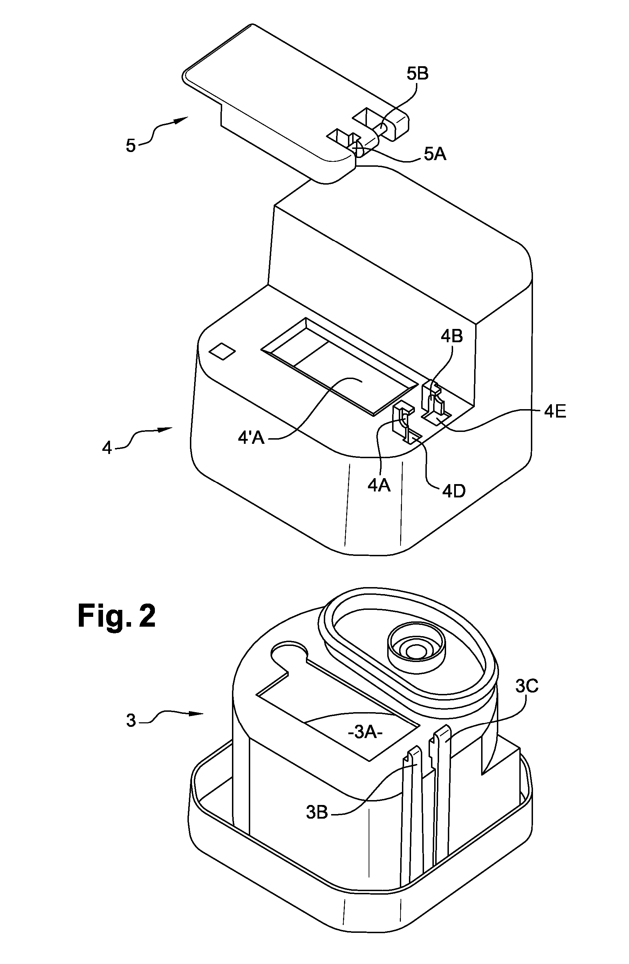

Sur la figure 2, sont représentés à plus grande échelle le couvercle 3, la coiffe 4 et le couvre-écran 5.

Le couvre-écran 5 est pourvu de deux axes de pivotement 5A, 5B disposés chacun sur un palier 4A, 4B porté par la coiffe 4 et la coiffe est pourvue de deux orifices 4D, 4E de passage d'un élément de verrouillage 3B, 3C des axes 5A, 5B sur les paliers 4A, 4B, ces éléments de verrouillage étant portés par le couvercle 3.

Si le mode de réalisation représenté et décrit présente deux axes, deux paliers et deux éléments de verrouillage, selon l'invention, il peut être prévu un nombre d'axes différent et même un seul axe, un seul palier et un seul élément de verrouillage.

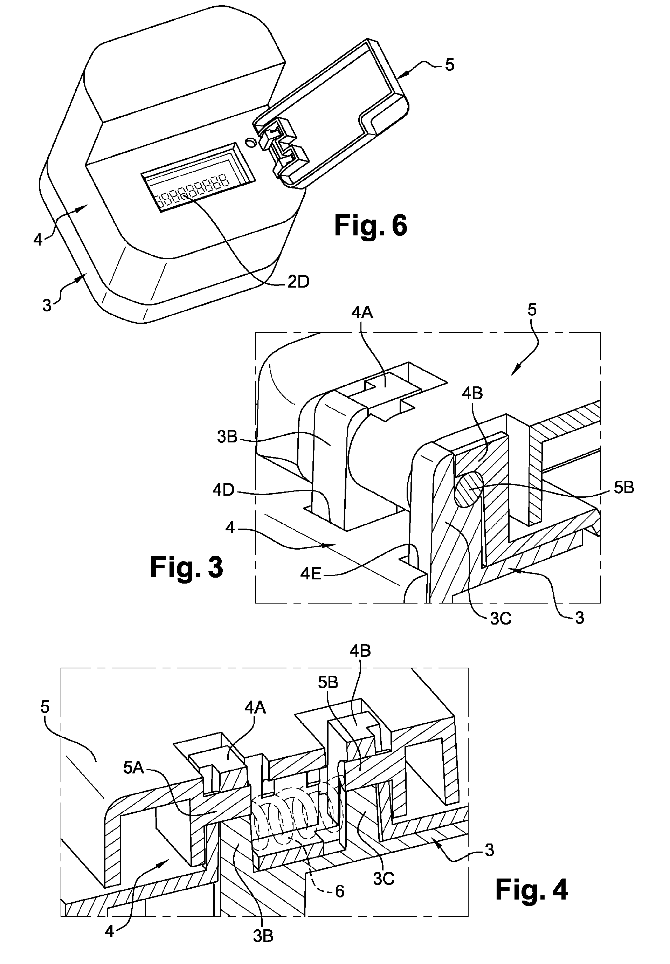

La figure 3 est une vue en coupe de ces élément en position montée. Cette coupe est effectuée transversalement à un des axes 5B.

La figure 4 est une autre vue en coupe de ces éléments en position montée. Cette coupe est effectuée selon l'axe longitudinal des axes 5A, 5B.

Comme visible sur ces figures, chaque palier 4A, 4B est constitué d'un logement de section en L inversé et chaque élément de verrouillage 3B, 3C est constitué d'un logement complémentaire de section en L, chaque orifice 4D, 4E étant adjacent au palier correspondant.

Lors du montage, les axes 5A, 5B portés par le couvre-écran 5 sont disposés sur les paliers 4A, 4B portés par la coiffe 4 puis la coiffe 4 est disposée sur le couvercle 3, les éléments de verrouillage 3B, 3C étant introduits dans les orifices 4D, 4E correspondants. La coiffe 4 et le couvercle 3 étant maintenus assemblés, paliers 4A, 4B et éléments de verrouillage 3B, 3C forment une charnière indémontable pour l'ouverture ou la fermeture du couvre-écran 5, par pivotement de ses axes 5A, 5B.

Le couvre-écran 5 peut être pourvu d'un ressort 6 de rappel en position fermée.

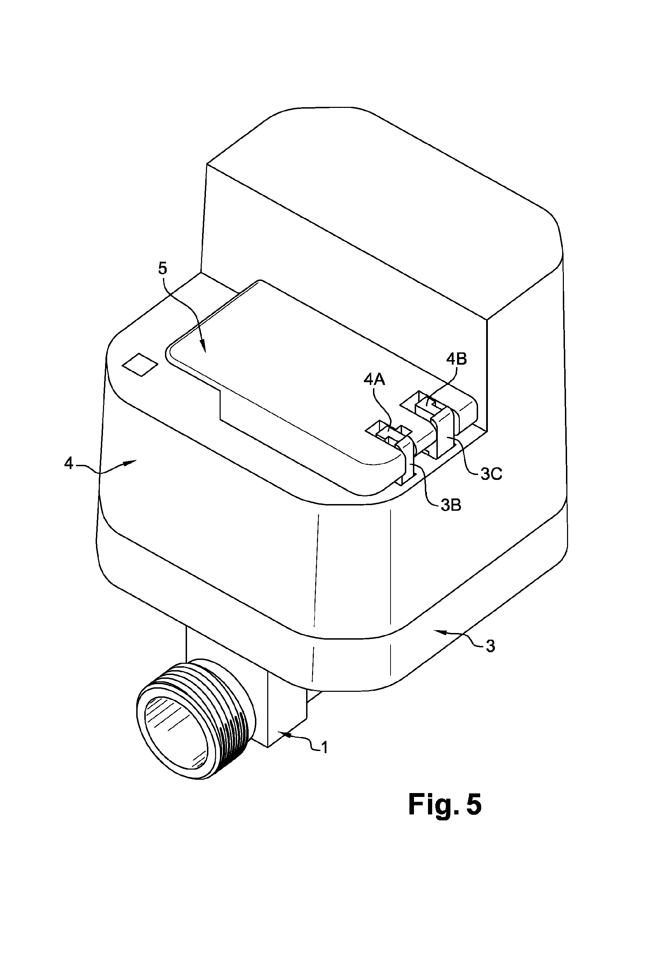

La figure 5 est une vue en perspective d'un compteur conforme à l'invention, avec son couvre-écran 5 fermé, et la figure 6 est une vue en perspective d'un compteur conforme à l'invention, avec son couvre-écran 5 ouvert.

## Revendications

1. Compteur de fluide, en particulier d'eau, comportant un totalisateur (2) présentant une carte électronique (2C) supérieure comportant un écran de comptage (2D), ce totalisateur (2) étant recouvert d'un couvercle (3) comportant une fenêtre (3A) de visualisation dudit écran (2D) et ce couvercle (3) étant lui-même recouvert d'une coiffe (4) présentant une fenêtre externe (4'A) de visualisation dudit écran, un couvre-écran (5) étant monté sur ladite coiffe (4) pour recouvrir et protéger ledit écran (2D) et ladite fenêtre externe (4'A), compteur **caractérisé en ce que** ledit couvre-écran (5) est pourvu d'au moins un axe de pivotement (5A, 5B) disposé sur un palier (4A, 4B) porté par ladite coiffe (4) et **en ce que** ladite coiffe (4) est pourvue d'au moins un orifice (4D, 4E) de passage d'un élément de verrouillage (3B, 3C) dudit axe sur ledit palier, cet élément de verrouillage étant porté par ledit couvercle (3).

2. Compteur selon la revendication 1, **caractérisé en ce que** ledit palier (4A, 4B) est constitué d'un logement de section en L inversé.

3. Compteur selon la revendication 2, **caractérisé en ce que** l'élément de verrouillage (3B, 3C) est constitué d'un logement complémentaire de section en L, ledit orifice (4D , 4E) étant adjacent audit palier (4A, 4B).

4. Compteur selon l'une des revendications précédentes, **caractérisé en ce que** ledit couvre-écran (5) est pourvu de deux dits axes de pivotement (5A, 5B) disposés sur deux dits paliers (4A, 4B) et **en ce que** ladite coiffe (4) est pourvue de deux dits orifices (4D, 4E) de passage de deux dits élément de verrouillage (3B, 3C).

5. Compteur selon l'unes des revendications précédentes, **caractérisé en ce que** ledit couvre-écran (5) est pourvu d'un ressort de rappel (6) en position fermée.
